# EUROPÄISCHE PATENTSCHRIFT

(11) **EP 0 761 696 B1**
(45) Veröffentlichungstag und Bekanntmachung des Hinweises auf die Patenterteilung: **01.04.1998**
(21) Anmeldenummer: 96112429.4
(22) Anmeldetag: 01.08.1996
(51) Int. Cl.: C08F 10/00, C08F 4/02

(54) **Katalysatorsysteme vom Typ der Ziegler-Natta-Katalysatoren**
Catalytic systems of the Ziegler-Natta type
Systèmes catalytiques du type Ziegler-Natta

(30) Priorität: 09.08.1995 DE 19529240; 06.12.1995 DE 19545497
(43) Veröffentlichungstag der Anmeldung: 12.03.1997
(73) Patentinhaber: BASF AKTIENGESELLSCHAFT, 67056 Ludwigshafen (DE)
(72) Erfinder: Hüffer, Stephan, Dr., 67071 Ludwigshafen (DE); Kerth, Jürgen, Dr., 67316 Carlsberg (DE); Kölle, Peter, Dr., 67098 Bad Dürkheim (DE); Müller, Patrik, Dr., 67661 Kaiserslautern (DE); Hemmerich, Rainer, Dr., 67269 Grünstadt (DE); Kersting, Meinolf, Dr., 67435 Neustadt (DE); Werner, Rainer Alexander, Dr., 67098 Bad Dürkheim (DE); Scherer, Günter, Dr., 67435 Neustadt (DE); Seelert, Stefan, Dr., 67227 Frankenthal (DE)

(56) Entgegenhaltungen:
- EP-A- 0 243 165
- WO-A-96/05236
- GB-A- 2 001 043
- DATABASE WPI Derwent Publications Ltd., London, GB; AN 91-019589 XP002018261 & JP-A-02 293 314 (MITSUBISHI) , 4.Dezember 1990

## Beschreibung

Die vorliegende Erfindung betrifft Katalysatorsysteme vom Typ der Ziegler-Natta-Katalysatoren, enthaltend als aktive Bestandteile
a) eine titanhaltige Feststoffkomponente, die eine Verbindung des Titans, eine Verbindung des Magnesiums, ein Halogen, Kieselgel als Träger und einen Carbonsäureester als Elektronendonorverbindung enthält,
   sowie als Cokatalysator
b) eine Aluminiumverbindung und
c) gegebenenfalls eine weitere Elektronendonorverbindung,
   wobei das verwendete Kieselgel einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt

Außerdem betrifft die Erfindung ein Verfahren zur Herstellung derartiger Ziegler-Natta-Katalysatorsysteme, die Herstellung von Polymerisaten des Propylens mit Hilfe dieser Katalysatorsysteme, die hiernach erhältlichen Polymerisate sowie Folien, Fasern und Formkörper aus diesen Polymerisaten.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anscnließend die Polymerisation durchgeführt.

Weiterhin werden in der US-A 48 57 613 und der US-A 52 88 824 Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Stellt man aus Polymerisaten, die mit Hilfe der in den US-A 48 57 613 und den US-A 52 88 824 beschriebenen Katalysatorsysteme erhalten wurden, Folien her, so beobachtet man häufig das erhöhte Auftreten von sogenannten Mikrostippen, d.h. von kleinen Unregelmäßigkeiten an der Oberfläche der Folien. Treten derartige Mikrostippen gehäuft auf, so beeinträchtigen sie die optische Qualität der Folie.

Der vorliegenden Erfindung lag daher die Aufgabe zugrunde, ausgehend von den in der US-A 48 57 613 und der US-A 52 88 824 beschriebenen Katalysatorsystemen ein verbessertes Katalysatorsystem vom Typ der Ziegler-Natta-Katalysatoren zu entwickeln, welches die obengenannten Nachteile hinsichtlich der Bildung von Mikrostippen nicht aufweist und sich darüber hinaus durch eine hohe Produktivität und Stereospezifität der dabei erhaltenen Polymerisate auszeichnet.

Demgemäß wurden die eingangs definierten Katalysatorsysteme vom Typ der Ziegler-Natta-Katalysatoren gefunden.

Die erfindungsgemäßen Katalysatorsysteme enthalten u.a. neben einer titanhaltigen Feststoffkomponente a) noch einen Cokatalysator. Als Cokatalysator kommt dabei die Aluminiumverbindung b) in Frage. Vorzugsweise wird neben dieser Aluminiumverbindung b) als weiterer Bestandteil des Cokatalysators noch eine Elektronendonorverbindung c) eingesetzt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner Kieselgel als Träger.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi - (C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 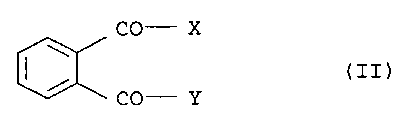 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst als feinteiligen Träger Kieselgel (SiO₂), welches in der Regel einen mittleren Teilchendurchmesser von 5 bis 200 µm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol des drei- oder vierwertigen Titans und 0,01 bis 1 mol, insbesondere 0,1 bis 0,5 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommt dabei u.a. eine Aluminiumverbindung b) in Frage.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Tialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (I)

R¹ ₙSi(OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec. butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Erfindungsgemäß wird in der titanhaltigen Feststoffkomponente a) ein solches feinteiliges Kieselgel verwendet, welches einen mittleren Teilchendurchmesser von 5 bis 200 µm, insbesondere von 20 bis 70 µm und einen mittleren Teilchendurchmesser der Primärpartikel von 1 bis 10 µm, insbesondere von 1 bis 5 µm aufweist. Bei den sogenannten Primärpartikeln handelt es sich dabei um poröse, granuläre Kieselgelpartikel, welche durch Mahlung, gegebenenfalls nach entsprechender Siebung, aus einem SiO₂-Hydrogel erhalten werden.

Weiterhin ist das erfindungsgemäß zu verwendende feinteilige Kieselgel u.a. auch noch dadurch charakterisiert, daß es Hohlräume bzw. Kanäle mit einem mittleren Durchmesser von 1 bis 10 µm, insbesondere von 1 bis 5 µm aufweist, deren makroskopischer Volumenanteil am Gesamtpartikel im Bereich von 5 bis 20 %, insbesondere im Bereich von 5 bis 15 % liegt. Das feinteilige Kieselgel weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf.

Aufgrund der in dem feinteiligen Kieselgel vorhandenen Hohlräume bzw. Kanäle liegt im Trägermaterial eine deutlich verbesserte Verteilung der Katalysatoraktivkomponenten vor. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus. Ein solches feinteiliges Kieselgel ist u.a. erhältlich durch Sprühtrocknen von vermahlenem, entsprechend gesiebten SiO₂-Hydrogel, welches hierzu mit Wasser oder einem aliphatischen Alkohol vermaischt wird. Ein solches feinteiliges Kieselgel ist aber auch im Handel erhältlich.

Das Kieselgel liegt dabei innerhalb der titanhaltigen Feststoffkomponente a) in solchen Mengen vor, daß auf 1 Mol des Kieselgels 0,1 bis 1,0 Mol, insbesondere 0,2 bis 0,5 Mol der Verbindung des Magnesiums treffen.

Die als Cokatalysatoren wirkenden Verbindungen b) und gegebenenfalls c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) sowie gegebenenfalls c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die erfindungsgemäßen Katalysatorsysteme eigenen sich besonders gut für die Herstellung von Polymerisaten des Propylens, d.h. Homopolymerisaten des Propylens und Copolymerisaten des Propylens zusammen mit anderen C₂-C₁₀-Alk-1-enen.

Unter der Bezeichnung C₂-C₁₀-Alk-1-ene sollen dabei u.a. Ethylen, But-1-en, Pent-1-en, Hex-1-en, Hept-1-en oder Oct-1-en verstanden werden, wobei die Comonomere Ethylen und But-1-en besonders bevorzugt sind.

Die erfindungsgemäßen Katalysatorsysteme können aber auch zur Herstellung von Polymerisaten anderer C₂-C₁₀-Alk-1-ene verwendet werden, beispielsweise zur Herstellung von Homo- oder Copolymerisaten des Ethylens, der But-1-ens, des Pent-1-ens, des Hex-1-ens, des Hept-1-ens oder des Oct-1-ens.

Die Herstellung derartiger Polymerisate von C₂-C₁₀-Alk-1-enen kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer, d.h. die mittlere Verweilzeit, hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Speziell bei der Herstellung von Propylenhomopolymerisaten wird die Polymerisationsreaktion bevorzugt bei Temperaturen von 50 bis 100°C, insbesondere von 60 bis 90°C, bei Drücken von 15 bis 40 bar, insbesondere von 20 bis 35 bar und mittleren Verweilzeiten von 0,5 bis 5 Stunden, insbesondere von 0,5 bis 3 Stunden durchgeführt. Die Molmasse der dabei gebildeten Poly-alk-1-ene kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die mit Hilfe des erfindungsgemäßen Katalysatorsystems erhaltenen Propylenhomo- und -copolymerisate sind in den für Polyalk-1-ene üblichen Molmassen erhältlich, wobei Polymerisate mit Molmassen (Gewichtsmittel) zwischen 20 000 und 500 000 bevorzugt werden. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Das erfindungsgemäße Katalysatorsystem weist gegenüber den bisher bekannten Katalysatorsystemen eine höhere Produktivität und eine verbesserte Stereospezifität, insbesondere bei Gasphasenpolymerisationen auf. Die auf diese Weise erhältlichen Polymerisate zeichnen sich auch durch eine hohe Schüttdichte und einem niedrigen Restchlorgehalt aus. Weiterhin ist es bei dem erfindungsgemäßen Katalysatorsystem von Vorteil, daß die Mikrostippenbildung bei den daraus erhaltenen Polymerisaten deutlich verringert ist.

Aufgrund ihrer guten mechanischen Eigenschaften eignen sich die mit dem erfindungsgemäßen Katalysatorsystem hergestellten Propylenpolymerisate vor allem für die Herstellung von Folien, Fasern und Formkörpern.

### Beispiele

### Beispiel 1

### a) Herstellung der titanhaltigen Feststoffkomponente (1)

In einer ersten Stufe wurde feinteiliges Kieselgel (SiO₂), das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO2 0,3 Mol der Magnesiumverbindung eingesetzt wurden. Das feinteilige Kieselgel war zusätzlich durch eine mittlere Teilchengröße der Primärspartikel von 3-5 µm und durch Hohlräume und Kanäle mit einem Durchmesser von 3-5 µm charakterisiert, wobei der makroskopische Volumenanteil der Hohlräume und Kanäle aus Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,3 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,5 Gew.-% Ti
7,4 Gew.-% Mg
28,2 Gew.-% Cl.

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Absorption nach DIN 66131 oder durch Quecksilber-Porosimetrie nach DIN 66133. Die mittlere Teilchengroße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels.

### b) Polymerisation von Propylen

Die Polymerisation wurde in einem vertikal gerührten Gasphasenreaktor mit einem Nutzvolumen von 800 1 in Anwesenheit von Wasserstoff als Molekulargewichtsregler durchgeführt. Der Reaktor enthielt ein bewegtes Festbett aus feinteiligem Polymerisat. Der Reaktorausstoß an Polymerisat betrug 152 kg Polypropylen pro Stunde.

In den Gasphasenreaktor wurde bei einem Druck von 32 bar und bei einer Temperatur von 80°C gasförmiges Propylen eingeleitet. Bei einer mittleren Verweilzeit von 1,5 Stunden wurde mit Hilfe der in Beispiel 1 a beschriebenen titanhaltigen Feststoffkomponente a) kontinuierlich polymerisiert, wobei pro Stunde 6,6 g der titanhaltigen Feststoffkomponente a) 1384 mMol Triethylaluminium und 40 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 12,2 g/10 min., bei 230°C und 2,16 kg (nach DIN 53 735).

### Vergleichsbeispiel A

Es wurde analog zum erfindungsgemäßen Beispiel Propylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein Propylenhomopolymerisat mit einem Schmelzflußindex von 12,5 g/10 min., bei 230°C und 2,16 kg (nach DIN 53 735).

In der nachfolgenden Tabelle I sind sowohl für das erfindungsgemäße Beispiel 1 als auch für das Vergleichsbeispiel A die Produktivität des eingesetzten Katalysatorsystems als auch die folgenden Eigenschaften der jeweils erhaltenen Propylenhomopolymerisate aufgeführt: xylolöslicher Anteil (Maß für die Stereospezifität des Polymerisats), heptanlöslicher Anteil (Maß für die Stereospezifität des Polymerisats), Chlorgehalt, Schüttdichte, Schermodul (G-Modul), Viskosität und Anzahl der Mikrostippen.

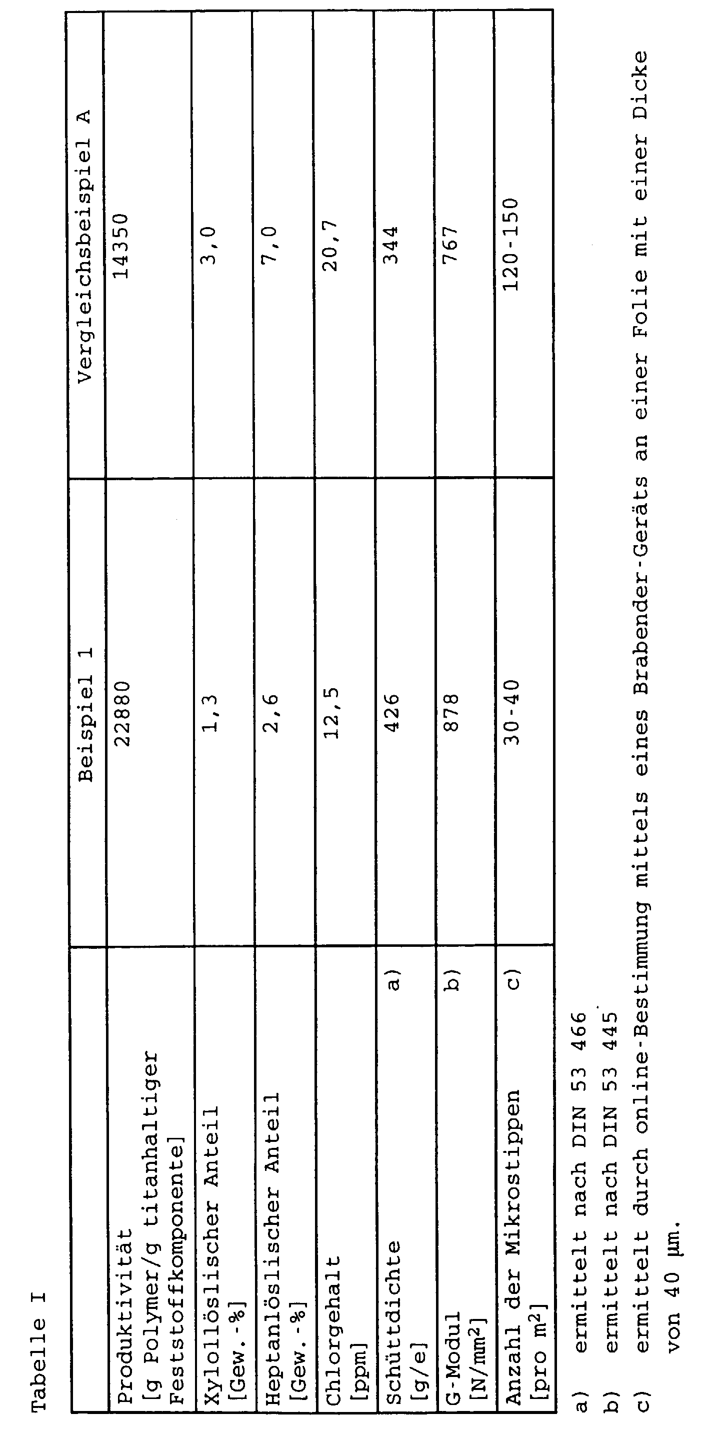

Ein Vergleich zwischen dem erfindungsgemäßen Beispiel 1 und dem Vergleichsbeispiel A macht deutlich, daß das erfindungsgemäße Katalysatorsystem eine höhere Produktivität aufweist und zu Polymerisaten des Propylens mit einer erhöhten Stereospezifität (geringere xylol- und heptanlösliche Anteile), einem verringerten Chlorgehalt und einer erhöhten Schüttdichte führt. Weiterhin zeichnen sich die mit Hilfe des erfindungsgemäßen Katalysatorsystems erhaltenen Polymerisate des Propylens auch durch eine höhere Steifigkeit (höherer G-Modul) und durch eine deutlich verringerte Anzahl von Mikrostippen aus.

### Beispiel 2

### a) Herstellung der titanhaltigen Feststoffkomponente (1)

In einer ersten Stufe wurde feinteiliges Kieselgel (SiO₂), das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,5 Gew.-% Ti
7,4 Gew.-% Mg
28,2 Gew.-% Cl.

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Adsorption nach DIN 66131 oder durch Quecksilber-Porosimetrie nach DIN 66133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels.

### b) Polymerisation von Propylen

Die Polymerisation wurde in einem vertikal gerührten Gasphasenreaktor mit einem Nutzvolumen von 800 1 in Anwesenheit von Wasserstoff als Molekulargewichtsregler durchgeführt. Der Reaktor enthielt ein bewegtes Festbett aus feinteiligem Polymerisat.

In den Gasphasenreaktor wurde bei einem Druck von 32 bar und bei einer Temperatur von 80°C gasförmiges Propylen eingeleitet. Bei einer mittleren Verweilzeit von 1,5 Stunden wurde mit Hilfe der in Beispiel 2 a beschriebenen titanhaltigen Feststoffkomponente a) kontinuierlich polymerisiert, wobei pro Stunde 7,4 g der titanhaltigen Feststoffkomponente a) 450 mMol Triethylaluminium und 45 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 11,9 g/10 min., bei 230°C und 2,16 kg (nach DIN 53 735).

### Vergleichsbeispiel B

Es wurde analog zum erfindungsgemäßen Beispiel 2 Propylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein Propylenhomopolymerisat mit einem Schmelzflußindex von 12,4 g/10 min., bei 230°C und 2,16 kg (nach DIN 53 735).

### Beispiel 3

Das erfindungsgemäße Beispiel 2 wurde analog wiederholt. Im vertikal gerührten 800 l-Gasphasenreaktor wurde bei einer mittleren Verweilzeit von 1,5 Stunden Propylen eingeleitet. Es wurde bei einer mittleren Verweilzeit von 1,5 Stunden kontinuierlich polymerisiert, wobei pro Stunde 6,6 g der beschriebenen titanhaltigen Feststoffkomponente, 450 mMol der Aluminiumkomponente und 15 mMol Dimethoxyisobutylisopropylsilan als Katalysatorbestandteile verwendet wurden.

Nach Beendigung der Gasphasenpolymerisation erhielt man ein Propylenhomopolymerisat mit einem Schmelzflußindex von 12,3 g/10 min, bei 230°C und 2,16 kg (nach DIN 53 735).

### Vergleichsbeispiel C

Es wurde analog zum erfindungsgemäßen Beispiel 3 Propylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein Propylenhomopolymerisat mit einem Schmelzflußindex von 13,0 g/10 min., bei 230°C und 2,16 kg (nach DIN 53 735).

### Beispiel 4

Das erfindungsgemäße Beispiel 2 wurde analog wiederholt. Im vertikal gerührten 800 l-Gasphasenreaktor wurde bei einer mittleren Verweilzeit von 1,5 Stunden Propylen eingeleitet. Es wurde bei einer mittleren Verweilzeit von 1,5 Stunden kontinuierlich polymerisiert, wobei pro Stunde 5,9 g der beschriebenen titanhaltigen Feststoffkomponente, 450 mMol der Aluminiumkomponente und 9 mMol Dimethoxyisobutylisopropylsilan als Katalysatorbestandteile verwendet wurden.

Nach Beendigung der Gasphasenpolymerisation erhielt man ein Propylenhomopolymerisat mit einem Schmelzflußindex von 12,8 g/10 min, bei 230°C und 2,16 kg (nach DIN 53 735).

### Vergleichsbeispiel D

Es wurde analog zum erfindungsgemäßen Beispiel 4 Propylen mit dem gleichen Katalysatorsystem und unter den gleichen Bedingungen polymerisiert, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Nach Beendigung der Gasphasenpolymerisation erhielt man ein Propylenhomopolymerisat mit einem Schmelzflußindex von 12,1 g/10 min., bei 230°C und 2,16 kg (nach DIN 53 735).

In der nachfolgenden Tabelle II sind sowohl für die erfindungsgemäßen Beispiele 2 bis 4 als auch für die Vergleichsbeispiele A bis C die Produktivität des eingesetzten Katalysatorsystems als auch die folgenden Eigenschaften der jeweils erhaltenen Propylenhomopolymerisate aufgeführt: xylollöslicher Anteil (Maß für die Stereospezifität des Polymerisats), Chlorgehalt und Steifigkeit (G-Modul).

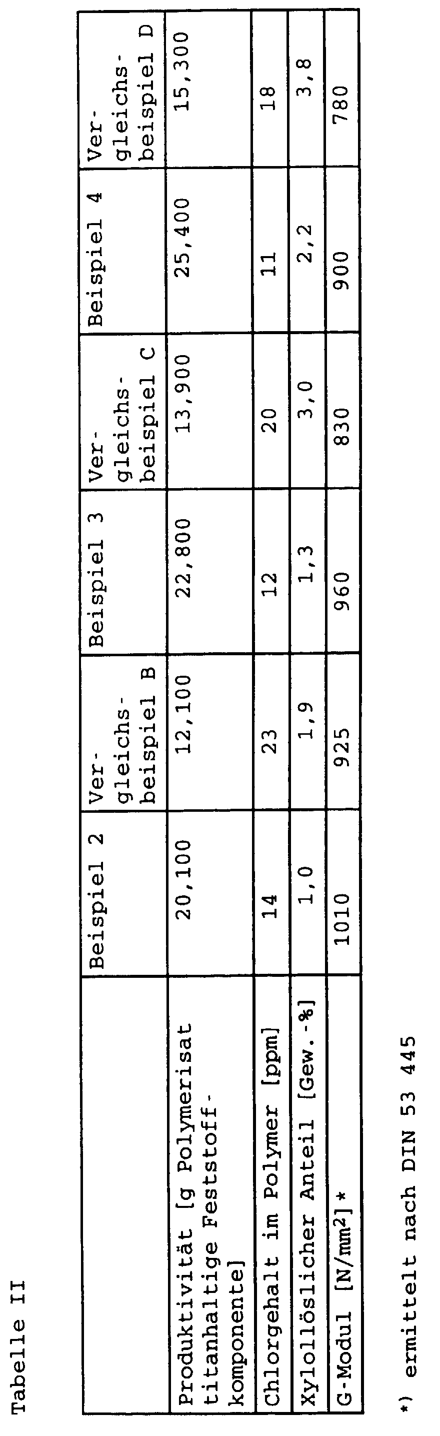

Ein Vergleich zwischen den erfindungsgemäßen Beispielen 2 bis 4 und den Vergleichsbeispielen B bis D macht deutlich, daß das erfindungsgemäße Verfahren eine höhere Produktivität aufweist und zu Polymerisaten des Propylens mit einer erhöhten Stereospezifität (geringere xylollösliche Anteile), einem verringerten Chlorgehalt und einer erhöhten Steifigkeit (höherer G-Modul) führt.

## Patentansprüche

1. Katalysatorsysteme vom Typ der Ziegler-Natta-Katalysatoren, enthaltend als aktive Bestandteile
a) eine titanhaltige Feststoffkomponente, die eine Verbindung des Titans, eine Verbindung des Magnesiums, ein Halogen, Kieselgel als Träger und einen Carbonsäureester als Elektronendonorverbindung enthält,
sowie als Cokatalysator
b) eine Aluminiumverbindung und
c) gegebenenfalls eine weitere Elektronendonorverbindung,
wobei das verwendete Kieselgel einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

2. Katalysatorsysteme nach Anspruch 1, wobei das verwendete Kieselgel Hohlräume und Kanäle mit einem durchschnittlichen Durchmesser von 1 bis 5 µm aufweist, deren makroskopischer Volumenanteil am Gesamtpartikel im Bereich von 5 bis 15 % liegt.

3. Katalysatorsysteme nach einem der Ansprüche 1 oder 2, wobei das verwendete Kieselgel sprühgetrocknet ist.

4. Katalysatorsysteme nach den Ansprüchen 1 bis 3, wobei als weitere Elektronendonorverbindung c) siliciumorganische Verbindungen der allgemeinen Formel (I)
R¹ ₙSi(OR²)₄₋ₙ (I)
verwendet werden, wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² gleich oder verschieden ist und eine C₁- bis C₂₀-Alkylgruppe bedeutet und n für die Zahlen 1, 2 oder 3 steht.

5. Katalysatorsysteme nach den Ansprüchen 1 bis 4, wobei als Aluminiumverbindung b) eine Trialkylaluminiumverbindung verwendet wird, deren Alkylgruppen jeweils 1 bis 8 C-Atome aufweisen.

6. Verfahren zur Herstellung von Katalysatorsystemen gemäß den Ansprüchen 1 bis 5, dadurch gekennzeichnet, daß man die titanhaltige Feststoffkomponente a) und den Cokatalysator b) und gegebenenfalls c) bei Temperaturen von 0 bis 150°C und Drücken von 1 bis 100 bar aufeinander einwirken läßt.

7. Verfahren zur Herstellung von Polymerisaten des Propylens durch Polymerisation von Propylen und gegebenenfalls von zugegebenen Comonomeren bei Temperaturen von 20 bis 150°C und Drücken von 1 bis 100 bar in Gegenwart von Ziegler-Natta-Katalysatorsystemen, dadurch gekennzeichnet, daß man Katalysatorsysteme gemäß den Ansprüchen 1 bis 5 verwendet.

8. Polymerisate des Propylens, erhältlich nach dem Verfahren gemäß Anspruch 7.

9. Propylenhomopolymerisate, erhältlich durch Polymerisation von Propylen bei Temperaturen von 20 bis 100°C, Drücken von 15 bis 40 bar und mittleren Verweilzeiten von 0,5 bis 5 Stunden im Gegenwart von Ziegler-Natta-Katalysatorsystemen nach den Ansprüchen 1 bis 5.

10. Folien, Fasern und Formkörper aus den Polymerisaten gemäß Ansprüchen 8 oder 9.

## Claims

1. A catalyst system of the Ziegler-Natta type, comprising as active constituents
a) a titanium-containing solid component comprising a compound of titanium, a compound of magnesium, a halogen, silica gel as support and a carboxylic ester as electron donor compound,
and also, as cocatalyst,
b) an aluminum compound and
c) if desired, a further electron donor compound,
wherein the silica gel used has a mean particle diameter of from 5 to 200 µm, a mean particle diameter of the primary particles of from 1 to 10 µm and voids or channels having a mean diameter of from 1 to 10 µm whose macroscopic proportion by volume in the total particle is in the range from 5 to 20%.

2. A catalyst system as claimed in claim 1, wherein the silica gel used has voids and channels having an average diameter of from 1 to 5 µm whose macroscopic proportion by volume in the total particle is in the range from 5 to 15%.

3. A catalyst system as claimed in claim 1 or 2, wherein the silica gel used is spray dried.

4. A catalyst system as claimed in any of claims 1 to 3, wherein the further electron donor compound c) used is an organosilicon compound of the general formula (I)
R¹ ₙSi(OR²)₄₋ₙ (I),
where R¹ are identical or different and are each a C₁-C₂₀-alkyl group, a 5- to 7-membered cycloalkyl group which in turn can bear a C₁-C₁₀-alkyl group, or a C₆-C₂₀-aryl or arylalkyl group, R² are identical or different and are each a C₁-C₂₀-alkyl group and n is 1, 2 or 3.

5. A catalyst system as claimed in any of claims 1 to 4, wherein the aluminum compound b) used is a trialkylaluminum compound whose alkyl groups each have from 1 to 8 carbon atoms.

6. A process for producing a catalyst system as claimed in any of claims 1 to 5, wherein the titanium-containing solid component a) and the cocatalyst b) and, if used, c) are allowed to act on one another at from 0 to 150°C and at pressures of from 1 to 100 bar.

7. A process for preparing polymers of propylene by polymerization of propylene and, if desired, added comonomers at from 20 to 150°C and at pressures of from 1 to 100 bar in the presence of a Ziegler-Natta catalyst system, wherein a catalyst system as claimed in any of claims 1 to 5 is used.

8. A polymer of propylene obtainable by the process as claimed in claim 7.

9. A propylene homopolymer obtainable by polymerizing propylene at from 20 to 100°C, at pressures of from 15 to 40 bar and at mean residence times of from 0.5 to 5 hours in the presence of Ziegler-Natta catalyst systems as claimed in any of claims 1 to 5.

10. A film, fiber or molding comprising a polymer as claimed in claim 8 or 9.

## Revendications

1. Systèmes catalytiques du type des catalyseurs de Ziegler-Natta, qui contiennent, à titre de constituants actifs,
a) un composant solide contenant du titane, qui contient un composé du titane, un composé du magnésium, un halogène, du gel de silice, à titre de support et un ester d'acide carboxylique, à titre de composé donneur d'électrons,
comme aussi, à titre de cocatalyseur,
b) un composé d'aluminium et
c) éventuellement un composé donneur d'électrons supplémentaire, où le gel de silice utilisé possède un diamètre moyen des particules de 5 à 200 µm, un diamètre moyen des particules primaires de 1 à 10 µm et des espaces creux ou vides ou des canaux d'un diamètre moyen de 1 à 10 µm, dont la fraction volumique macroscopique, par rapport aux particules totales fluctue de 5 à 20%.

2. Systèmes catalytiques suivant la revendication 1, caractérisés en ce que le gel de silice utilisé présente des espaces creux ou vides et des canaux d'un diamètre moyen de 1 à 5 µm, dont la fraction volumique macroscopique par rapport aux particules totales fluctue de 5 à 15%.

3. Systèmes catalytiques suivant la revendication 1 ou 2, caractérisés en ce que le gel de silice utilisé est séché par pulvérisation.

4. Systèmes catalytiques suivant l'une quelconque des revendications 1 à 3, caractérisés en ce que, à titre de composé donneur d'électrons supplémentaire c), on utilise des composés organiques du silicium de la formule générale (I)
R¹ ₙSi(OR²)₄₋ₙ (I)
dans laquelle les symboles R¹ sont identiques ou différents et représentent chacun un radical alkyle en C₁ à C₂₀, un radical cycloalkyle pentavalent à heptavalent, qui peut, à son tour, porter un radical alkyle en C₁ à C₁₀, ou un radical arylalkyle ou aryle en C₆ à C₂₀, les symboles R² peuvent être identiques ou différents et représentent chacun un radical alkyle en C₁ à C₂₀ et n est égal à 1, 2 ou 3.

5. Systèmes catalytiques suivant l'une quelconque des revendications 1 à 4, caractérisés en ce que, à titre de composé d'aluminium b), on utilise un composé de trialkylaluminium dont les radicaux alkyle comportent à chaque fois de 1 à 8 atomes de carbone.

6. Procédé de préparation de systèmes catalytiques suivant l'une quelconque des revendications 1 à 5, caractérisé en ce qu'on laisse réagir les uns sur les autres le composant solide contenant du titane a) et le cocatalyseur b) et éventuellement c), à des températures de 0 à 150°C et sous des pressions de 1 à 100 bars.

7. Procédé de préparation de polymères du propylène par la polymérisation du propylène et éventuellement de comonomères ajoutés à des températures de 20 à 150°C et sous des pressions de 1 à 100 bars, en présence de systèmes catalytiques de Ziegler-Natta, caractérisé en ce que l'on utilise des systèmes catalytiques suivant l'une quelconque des revendications 1 à 5.

8. Polymères du propylène, que l'on peut obtenir par la mise en oeuvre du procédé suivant la revendication 7.

9. Homopolymères du propylène, que l'on peut obtenir par la polymérisation du propylène, à des températures de 20 à 100°C, sous des pressions de 15 à 40 bars et avec des durées de séjour moyennes de 0,5 à 5 heures, en présence de systèmes catalytiques de Ziegler-Natta suivant l'une quelconque des revendications 1 à 5.

10. Feuilles, fibres et articles ou corps moulés en polymères suivant l'une des revendications 8 ou 9.
